# FASCICULE DE BREVET EUROPEEN

(11) **EP 3 003 748 B1**
(45) Date de publication et mention de la délivrance du brevet: **01.05.2019**
(21) Numéro de dépôt: 14726645.6
(22) Date de dépôt: 28.05.2014
(51) Int. Cl.: B60H 1/00

(54) **GRILLE D'HOMOGÉNÉISATION D'UN FLUX D'AIR AVEC APPAREIL DE CHAUFFAGE**
GITTER ZUM HOMOGENISIEREN EINES LUFTSTROMS MIT HEIZVORRICHTUNG
GRID FOR HOMOGENISING AN AIR STREAM WITH HEATING APPARATUS

(30) Priorité: 30.05.2013 FR 1354963
(43) Date de publication de la demande: 13.04.2016
(73) Titulaire: Valeo Systemes Thermiques, 78320 Le Mesnil Saint Denis (FR)
(72) Inventeur: MARTINELL, Amanda, F-78640 Neauphle-Le-Château (FR); AILLOUD, Fabrice, F-78280 Guyancourt (FR); GRELLIER, Michel, F-94260 Fresnes (FR); SICOT, Claire, F-78280 Guyancourt (FR)
(74) Mandataire: Metz, Gaëlle
(86) Numéro de dépôt international: PCT/EP2014/061132
(87) Numéro de publication internationale: WO 2014/191494

(56) Documents cités:
- EP-A2- 0 826 528
- DE-A1-102008 036 609
- DE-A1-102011 113 446

## Description

La présente invention concerne une grille d'homogénéisation d'un flux d'air, telle que divulguée dans DE 10 2011 113446 A1, avec un appareil de chauffage pour un habitacle de véhicule automobile permettant le contrôle de la température de flux d'air dans une ou plusieurs zones de l'habitacle d'un véhicule automobile.

Un véhicule automobile est couramment équipé d'un appareil de chauffage qui est destiné à réguler les paramètres aérothermiques de l'air distribué dans l'habitacle, en particulier la température d'un flux d'air délivré par l'appareil à l'intérieur de l'habitacle.

Dans sa généralité, l'appareil comprend un boîtier délimité par des cloisons à travers lesquelles sont ménagées des ouvertures, dont au moins une entrée d'air et au moins une bouche de distribution d'air.

De façon connue, le boîtier loge généralement un groupe moto-ventilateur également appelé pulseur pour faire circuler le flux d'air depuis l'entrée d'air vers la bouche de distribution d'air.

Le boîtier loge aussi des moyens de traitement thermique notamment pour réchauffer le flux d'air préalablement à sa distribution à l'intérieur de l'habitacle à travers la bouche de distribution d'air.

De façon habituelle dans un véhicule automobile à moteur à combustion interne, le réchauffage de l'air destiné au chauffage de l'habitacle, ainsi qu'au désembuage et au dégivrage est assuré par passage d'un flux d'air à travers un échangeur thermique, plus précisément par un échange thermique entre le flux d'air et un liquide, en général le liquide de refroidissement du moteur.

Dans le cas d'un véhicule électrique propulsé par un moteur électrique, alimenté par une source de tension électrique embarquée, à savoir des batteries, les moyens de traitement thermique comprennent généralement un dispositif électrique qui est destiné à réchauffer l'air qui le traverse.

Ce dispositif de chauffage électrique comporte notamment des éléments chauffants, tel que des éléments résistifs, alimentés par les batteries et disposés de manière à être exposés directement à l'air traversant le dispositif de chauffage électrique.

Selon une solution connue, le dispositif de chauffage comprend des éléments résistifs par exemple à coefficient de température positif (CTP), tels que des pierres CTP. Il s'agit d'éléments dont la valeur résistive varie très fortement en fonction de la température. Plus précisément, la valeur ohmique des éléments résistifs CTP croît très rapidement au-delà d'un seuil de température prédéterminé.

Un connecteur électrique permet d'amener la puissance électrique nécessaire à l'alimentation du dispositif de chauffage électrique, par exemple à l'alimentation des éléments résistifs. Ce connecteur électrique peut être relié à une source de tension embarquée sur le véhicule.

En outre ces éléments résistifs sont commandés par une unité électronique de commande. L'unité électronique de commande est par exemple portée par le connecteur électrique.

Cependant, cette unité électronique de commande du dispositif de chauffage CTP chauffe beaucoup et par mesure de sécurité en cas de dépassement d'une température seuil donnée, l'alimentation électrique est coupée.

Afin d'éviter cette mise en protection thermique, réalisée par une coupure d'alimentation, il est donc nécessaire de refroidir l'unité électronique de commande.

À cet effet, on peut prévoir des dissipateurs thermiques en contact thermique avec le connecteur portant l'unité électronique de commande. Pour éviter la mise en protection thermique, plus d'air peut être envoyé au niveau des dissipateurs thermiques.

Cependant, dans le cas où les dissipateurs thermiques sont agencés sur un même côté du dispositif de chauffage, plus d'air est envoyé sur ce côté, engendrant ainsi un déséquilibre thermique entre les sorties d'air des deux côtés du dispositif de chauffage.

Toutefois, des contraintes de confort dans le véhicule imposent un faible écart de température entre les sorties d'air du dispositif de chauffage CTP du côté présentant les dissipateurs thermiques et de l'autre côté ne présentant pas les dissipateurs thermiques. Notamment, une tolérance de l'ordre de 5°C d'écart de température entre les sorties du dispositif de chauffage est souhaitée.

Pour ce faire, il est nécessaire d'homogénéiser le flux d'air devant traverser le dispositif de chauffage électrique.

On connaît des appareils de chauffage et/ou de climatisation comprenant en outre un évaporateur pour la fonction climatisation permettant de refroidir le flux d'air à destination de l'habitacle ou par exemple de déshumidifier le flux d'air avant son passage dans le dispositif de chauffage. Dans ce cas, l'évaporateur est placé en amont du dispositif de chauffage et homogénéise l'écoulement du flux d'air.

Cependant, dans le cas d'un appareil de chauffage dépourvu d'évaporateur en amont du dispositif de chauffage, la fonction d'homogénéisation du flux d'air en amont du dispositif de chauffage n'est plus réalisée par un évaporateur.

On connaît par ailleurs, des grilles d'homogénéisation de l'écoulement d'un flux d'air agencées en amont d'un échangeur thermique en l'absence d'évaporateur.

Toutefois, ces grilles d'homogénéisation connues ne sont pas adaptées pour une application avec un dispositif de chauffage CTP haute tension nécessitant le refroidissement des dissipateurs thermiques aptes à dissiper la chaleur générée par l'unité électronique de commande.

L'invention a donc pour objectif de pallier au moins partiellement ces inconvénients de l'art antérieur en proposant une solution pour répartir le flux d'air devant traverser le dispositif de chauffage CTP permettant un arrosage homogène du dispositif de chauffage CTP par le flux d'air tout en évitant la mise en protection thermique en cas de dépassement du seuil de température des dissipateurs thermiques.

La présente invention concerne un appareil de chauffage avec une grille d'homogénéisation pour véhicule automobile selon la première revendication.

Avec une telle grille d'homogénéisation, l'appareil de chauffage est amélioré. En effet, les dissipateurs thermiques peuvent être refroidis via la première ouverture de sorte que les coupures d'alimentation électrique en vue d'une mise en protection thermique peuvent être évitées. En outre, l'appareil de chauffage permet de répondre aux exigences des constructeurs en termes de température de confort dans l'habitacle et d'écart de température selon le côté de sortie d'air du dispositif de chauffage électrique.

La première ouverture permet de diriger une partie du flux d'air vers le ou les dissipateurs thermiques de sorte qu'il puisse être refroidi et que l'unité électronique de commande soit également refroidie tandis que la pluralité de deuxièmes ouvertures participent à la répartition d'un flux d'air uniforme vers le reste du dispositif de chauffage, lorsque la grille d'homogénéisation est agencée en amont de ce dispositif de chauffage électrique dans un appareil de chauffage correspondant.

La première ouverture est dimensionnée pour ne pas générer un écart de température important entre la sortie d'air du côté du dispositif de chauffage électrique au niveau du ou des dissipateurs thermiques et la sortie d'air du dispositif de chauffage électrique de l'autre côté.

Selon un aspect de l'invention, lesdites deuxièmes ouvertures présentent respectivement une section de passage d'air inférieure à la section de passage d'air de ladite au moins une première ouverture.

Selon un mode de réalisation préféré, la grille d'homogénéisation présente au moins une partie pleine agencée entre ladite au moins une première ouverture et la pluralité de deuxièmes ouvertures. Cette partie pleine adjacente à la première ouverture permet de respecter un écart de température de l'ordre de +/-5°C entre les sorties d'air du dispositif de chauffage électrique lorsque la grille d'homogénéisation est agencée en amont de ce dispositif de chauffage électrique dans un appareil de chauffage correspondant.

Ladite grille d'homogénéisation peut en outre comporter une ou plusieurs caractéristiques suivantes, prises séparément ou en combinaison :
- la grille d'homogénéisation présente une forme générale sensiblement parallélépipédique,
- ladite au moins une partie pleine s'étend sur toute la hauteur de la grille d'homogénéisation,
- ladite au moins une partie pleine s'étend sur une largeur présentant un rapport de l'ordre de un à trois avec la largeur de la première ouverture,
- les deuxièmes ouvertures présentent des sections de passage d'air hétérogènes, pour mieux répartir uniformément le flux d'air selon les conditions d'écoulement et de vitesses du flux d'air,
- la grille d'homogénéisation est réalisée en matériau plastique.

Ces caractéristiques de la grille d'homogénéisation permettent d'améliorer la répartition homogène du flux d'air vers le dispositif de chauffage tout en assurant le refroidissement de l'unité électronique de commande et ceci sans générer d'écart de température supérieur à +/-5°C au niveau des sorties du dispositif de chauffage électrique en fonctionnement.

De plus, l'agencement des ouvertures est choisi pour correspondre à la structure du dispositif de chauffage électrique associé.

Selon un mode de réalisation préféré, ledit au moins un élément chauffant est un élément résistif à coefficient de température positif. L'unité électronique de commande d'un tel dispositif de chauffage électrique à éléments résistifs à coefficient de température chauffe beaucoup et nécessite un bon refroidissement assuré grâce à la première ouverture en amont du ou des dissipateurs thermiques dissipant la chaleur générée par l'unité électronique de commande.

Ledit appareil de chauffage peut en outre comporter une ou plusieurs caractéristiques suivantes, prises séparément ou en combinaison :
- la grille d'homogénéisation est sensiblement parallélépipédique et ladite au moins une première ouverture de la grille d'homogénéisation s'étend sur une hauteur de l'ordre de 50 % à 120 % de la hauteur dudit au moins un dissipateur thermique du dispositif de chauffage électrique,
- la grille d'homogénéisation est sensiblement parallélépipédique et ladite au moins une première ouverture s'étend sur une largeur sensiblement égale à la largeur dudit au moins un dissipateur thermique du dispositif de chauffage électrique,
- le dispositif de chauffage électrique comprend un connecteur portant l'unité électronique de commande réalisé en matériau métallique thermiquement conducteur et dans lequel ledit au moins un dissipateur thermique est réalisé d'une seule pièce avec le connecteur,
- ledit appareil de chauffage comprend une pluralité de dissipateurs thermiques définissant une forme générale sensiblement en peigne,
- le dispositif de chauffage électrique comprend au moins une ailette d'échange thermique agencée en contact thermique avec ledit au moins un élément chauffant et configurée pour être traversée par le flux d'air traversant le dispositif de chauffage électrique et pour transmettre la chaleur dudit au moins un élément chauffant audit flux d'air,
- lesdites deuxièmes ouvertures présentent respectivement une section de passage d'air inférieure à la section de passage d'air de ladite au moins une première ouverture,
- la grille d'homogénéisation présente au moins une partie pleine agencée entre ladite au moins une première ouverture et la pluralité de deuxièmes ouvertures,
- la grille d'homogénéisation présente une forme générale sensiblement parallélépipédique,
- ladite au moins une partie pleine s'étend sur toute la hauteur de la grille d'homogénéisation,
- ladite au moins une partie pleine s'étend sur une largeur présentant un rapport de l'ordre de un à trois avec la largeur de la première ouverture,
- les deuxièmes ouvertures présentent des sections de passage d'air hétérogènes,
- la grille d'homogénéisation est réalisée en matériau plastique.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 est une vue en coupe schématique d'un appareil de chauffage selon l'invention,
- la figure 2 est une vue agrandie d'une partie de l'appareil de chauffage de la figure 1,
- la figure 3 représente un dispositif de chauffage électrique de l'appareil de chauffage de la figure 1, et
- la figure 4 représente de façon schématique une grille d'homogénéisation pour homogénéiser le flux d'air devant traverser le dispositif de chauffage électrique de la figure 3.

Dans ces figures, les éléments identiques portent les mêmes références.

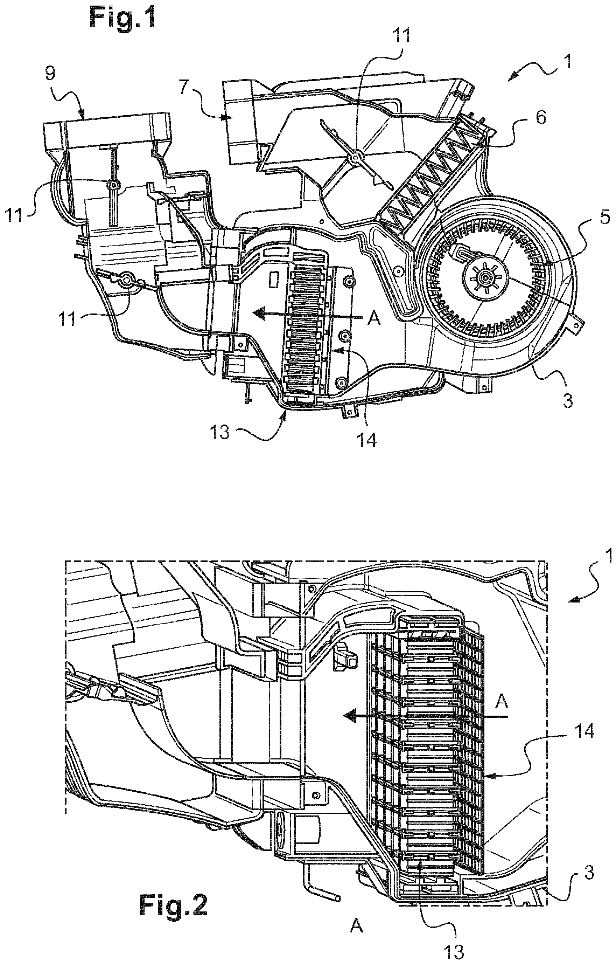

On a représenté sur la figure 1 une vue en coupe d'un appareil de chauffage 1 destiné à équiper un véhicule automobile pour réguler les paramètres aérothermiques du flux d'air distribué dans une ou plusieurs zones de l'habitacle du véhicule.

L'appareil de chauffage 1 comporte un boîtier 3 délimitant un volume interne définissant un passage de circulation d'un flux d'air.

L'appareil de chauffage 1 comprend un groupe moto-ventilateur également appelé pulseur 5 pour introduire de l'air dans le boîtier 3 de l'appareil de chauffage 1. On peut prévoir un filtre 6 du flux d'air en amont du pulseur 5 selon le sens d'écoulement du flux d'air dans le boîtier 3.

Le boîtier 3 comprend au moins une bouche d'admission 7 pour l'introduction d'un flux d'air extérieur provenant de l'extérieur du véhicule permettant sa circulation dans le volume interne délimité par le boîtier et/ou d'un flux d'air recyclé provenant de l'habitacle du véhicule et circulant de nouveau dans le volume interne délimité par le boîtier 3. L'appareil de chauffage 1 peut être alimenté aussi bien par le flux d'air extérieur ou le flux d'air recyclé que par un mélange des deux flux d'air extérieur et recyclé.

Le boîtier 3 comprend également au moins une bouche de sortie 9 du flux d'air vers une ou plusieurs zones de l'habitacle.

Un ou plusieurs volets de mixage 11 peuvent en outre être agencés dans le boîtier 3 pour répartir ou mixer le flux d'air.

L'appareil de chauffage 1 comprend en outre des moyens de traitement thermique du flux d'air introduit dans l'appareil de chauffage 1.

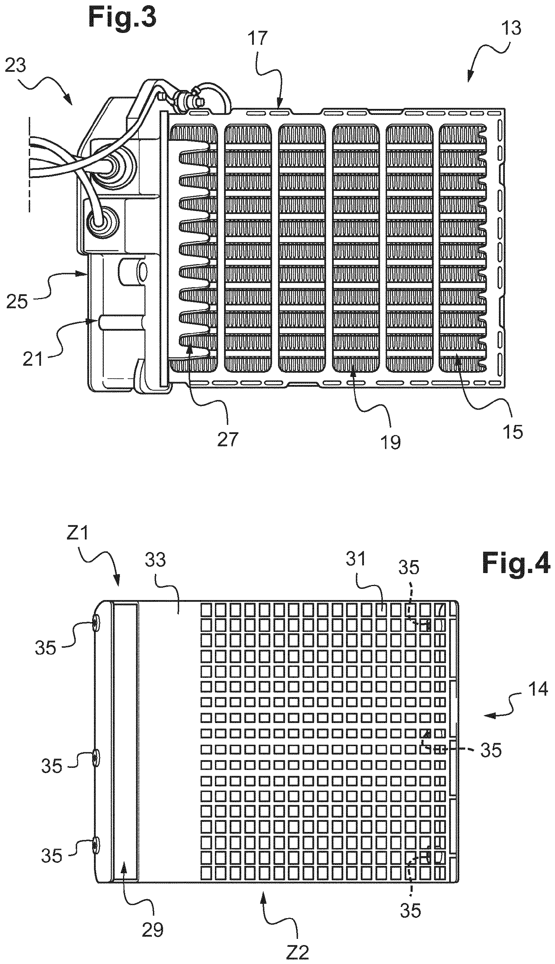

Selon le mode de réalisation décrit, l'appareil de chauffage 1 comporte :
- un dispositif de chauffage électrique 13, autrement appelé radiateur électrique, mieux visible sur les figures 2 et 3, pour assurer le réchauffage du flux d'air, et
- une grille d'homogénéisation 14, mieux visible sur les figures 2 et 4, agencée en amont du dispositif de chauffage électrique 13 selon le sens d'écoulement du flux d'air dans l'appareil de chauffage 1 comme l'illustre la figure 1.

En se référant de nouveau aux figures 1 et 2, le dispositif de chauffage électrique 13 est agencé dans le boîtier de l'appareil de chauffage 1 de façon à être traversé par le flux d'air à réchauffer.

Le dispositif de chauffage électrique 13 est placé transversalement dans la veine d'air de l'appareil de chauffage 1. Le flux d'air à réchauffer traverse le dispositif de chauffage électrique 13 selon une direction sensiblement perpendiculaire au plan général défini par le dispositif de chauffage électrique 13, comme l'illustre de façon schématique la flèche A. Le dispositif de chauffage électrique 13 présente donc deux faces opposées d'entrée et de sortie d'air, selon la direction d'écoulement du flux d'air à réchauffer.

Le dispositif de chauffage électrique 13 est apte à transformer l'énergie électrique prélevée par exemple sur le véhicule en énergie thermique restituée dans l'air traversant l'appareil de chauffage 1.

En référence à la figure 3, le dispositif de chauffage électrique 13 peut comporter au moins un élément chauffant 15.

Plus précisément, un élément chauffant 15 peut être un élément résistif de type à coefficient de température positif (CTP). Les éléments résistifs 15 sont par exemple réalisés sous la forme de pierres CTP. L'élément résistif 15 peut être de forme sensiblement parallélépipédique.

Le dispositif de chauffage électrique 13 peut en outre comporter un cadre 17, par exemple en plastique, à l'intérieur duquel sont agencés les éléments chauffants 15.

Les éléments chauffants 15 sont agencés dans le cadre 17 du dispositif de chauffage électrique 13 de manière à être exposés directement au flux d'air traversant le dispositif de chauffage électrique 13. Plus précisément, dans l'exemple décrit les éléments chauffants 15 reçus dans le cadre 17 du dispositif de chauffage électrique 13 s'étendent sensiblement perpendiculairement à la direction du flux d'air traversant le dispositif de chauffage électrique 13.

Le dispositif de chauffage électrique 13 peut comporter de plus au moins une ailette d'échange thermique 19 formée par exemple d'un ruban métallique plissé ou ondulé et venant en appui contre les éléments chauffants 15, tels que des pierres CTP.

Selon le mode de réalisation illustré sur la figure 3, le dispositif de chauffage électrique 13 comprend une pluralité d'ailettes d'échange thermique 19 agencées en alternance avec les éléments chauffants 15 et de sorte que deux ailettes d'échange thermique 19 enserrent chaque élément chauffant 15.

La fonction des ailettes d'échange thermique 19 réalisées par les rubans ondulés 19 dans l'exemple illustré sur la figure 3 consiste à échanger avec le flux d'air traversant le dispositif de chauffage électrique 13 la chaleur produite par les éléments chauffants 15, par exemple résistifs à effet CTP, de façon à chauffer le flux d'air traversant de part en part les ailettes d'échange thermique 19. Les ailettes d'échange thermique 19 permettent de transmettre la chaleur des éléments résistifs 15 au flux d'air à réchauffer qui traverse le dispositif de chauffage électrique 13.

A cet effet, les dissipateurs thermiques 19 sont réalisés en un matériau métallique thermiquement conducteur et sont agencés en contact thermique avec les éléments chauffants 15.

Par ailleurs, les éléments chauffants 15 sont alimentés en énergie électrique.

Le dispositif de chauffage 3 peut comporter à cet effet un connecteur 21 relié d'une part à une source d'alimentation électrique par exemple en provenance du véhicule et d'autre part à des terminaisons électriquement conductrices (non visibles) des éléments chauffants 15. Dans l'exemple illustré, le connecteur 21 peut être relié à des câbles 23 haute tension et basse tension du véhicule.

Le connecteur 21 permet donc de raccorder électriquement la source d'alimentation électrique en provenance par exemple du véhicule aux éléments chauffants 15 du dispositif de chauffage électrique 13.

Le dispositif de chauffage électrique 13 comprend en outre une unité électronique de commande 25 pour commander les éléments chauffants 15.

Afin de relier cette unité électronique de commande 25 aux éléments chauffants 15, le dispositif de chauffage électrique 13 comprend par exemple un connecteur, dans cet exemple le connecteur 21. Le connecteur 21 peut porter l'unité électronique de commande 25.

Ainsi, le connecteur 21 forme un moyen de connexion à la fois à la source d'alimentation électrique et à l'unité électronique de commande.

Le dispositif de chauffage électrique 13 comprend également au moins un dissipateur thermique 27 permettant de refroidir l'unité électronique de commande 25, et ainsi d'éviter la mise en protection thermique ou mise en défaut du dispositif de chauffage électrique 13 par coupure d'alimentation en cas de température trop élevée supérieure à un seuil prédéfini.

Selon le mode de réalisation illustré, le dispositif de chauffage électrique 13 comprend une pluralité de dissipateurs thermiques 27.

À cet effet, les dissipateurs thermiques 27 sont réalisés en matériau thermiquement conducteur, par exemple métallique, et sont agencés de façon à pouvoir dissiper la chaleur générée par l'unité électronique de commande 25.

Plus précisément dans l'exemple illustré les dissipateurs thermiques 27 sont réalisés d'une seule pièce avec le connecteur 21 portant l'unité électronique de commande 25. Le connecteur 21 est dans cet exemple réalisé en matériau métallique thermiquement conducteur.

De plus, les dissipateurs thermiques 27 peuvent ne pas être répartis uniformément sur la surface d'échange thermique du dispositif de chauffage électrique 13 avec le flux d'air le traversant.

En effet, selon le mode de réalisation décrit, les dissipateurs thermiques 27 sont agencés sur un même côté du dispositif de chauffage électrique 13, à savoir le côté du dispositif de chauffage électrique 13 connecté au connecteur 21, et sont donc adjacents à l'unité électronique de commande 25.

Par ailleurs, les dissipateurs thermiques 27 définissent par exemple ensemble une forme générale sensiblement en peigne.

En se référant de nouveau à la figure 2, la grille d'homogénéisation 14 est agencée en amont du dispositif de chauffage électrique 13 selon le sens d'écoulement du flux d'air à destination de l'habitacle devant être réchauffé.

Plus précisément, la grille d'homogénéisation 14 est agencée dans le boîtier 3 de l'appareil de chauffage 1 sur toute la section de passage d'air en amont du dispositif de chauffage électrique 13 de façon à forcer le flux d'air à destination de l'habitacle à passer complètement à travers la grille d'homogénéisation 14.

La grille d'homogénéisation 14 est conformée pour :
- d'une part répartir un flux d'air minimum pour l'arrosage et le refroidissement des dissipateurs thermiques 27 et
- d'autre part garantir un équilibre thermique au niveau des sorties d'air du dispositif de chauffage électrique 13 pour répondre aux contraintes de confort et aux spécifications des constructeurs, notamment un écart de température de l'ordre de +/- 5°C.

En se référant à la figure 4, la grille d'homogénéisation 14 présente une forme sensiblement parallélépipédique.

La grille d'homogénéisation 14 comporte une première zone Z1 présentant au moins une première ouverture 29 destinée à être agencée en vis-à-vis des dissipateurs thermiques 27 du dispositif de chauffage électrique 13.

Selon un mode de réalisation préféré, la première zone Z1 de la grille d'homogénéisation 14 présente une seule première ouverture 29 destinée à être agencée en vis-à-vis des dissipateurs thermiques 27 du dispositif de chauffage électrique 13.

La première ouverture 29 peut s'étendre sur une hauteur de l'ordre de 50 % à 120 % de la hauteur des dissipateurs thermiques 27. La première ouverture 29 s'étend avantageusement sur une largeur correspondant sensiblement à la largeur des dissipateurs thermiques 27 du dispositif de chauffage.

La grille d'homogénéisation 14 comporte également une deuxième zone Z2 distincte de la première zone Z1. Cette deuxième zone Z2 présente une pluralité de deuxièmes ouvertures 31 destinées à être en amont des éléments chauffants 15 selon le sens d'écoulement du flux d'air à réchauffer traversant le dispositif de chauffage électrique 13 lorsque la grille d'homogénéisation 14 est agencée dans le boîtier 3 en amont du dispositif de chauffage électrique 13. Ces deuxièmes ouvertures 31 sont distinctes de la première ouverture 29.

De plus, les deuxièmes ouvertures 31 dans cet exemple présentent respectivement une section de passage d'air inférieure à la section de passage d'air de la première ouverture 29.

Selon un mode de réalisation avantageux, la grille d'homogénéisation 14 comporte de plus au moins une partie pleine 33 adjacente à la ou les première(s) ouverture(s) 29.

Selon un mode de réalisation préféré, la grille d'homogénéisation 14 comporte une partie pleine 33 adjacente à la première ouverture 29.

La partie pleine 33 est agencée entre la première ouverture 29 et la pluralité de deuxièmes ouvertures 31.

Selon l'exemple illustré sur la figure 4, la partie pleine 33 s'étend sur toute la hauteur de la grille d'homogénéisation 14 et sur une largeur présentant par exemple un rapport de l'ordre de un à trois avec la largeur de la première ouverture 29.

Enfin, la pluralité de deuxièmes ouvertures 31 ou mailles forment un réseau qui s'étend sur le reste de la grille d'homogénéisation 14 depuis le côté de la partie pleine 33 opposé au côté adjacent à la première ouverture 29. Les deuxièmes ouvertures 31 sont destinées à être en agencées en vis-à-vis des éléments chauffants 15 du dispositif de chauffage électrique 13 une fois la grille d'homogénéisation 14 agencée dans le boîtier 3 de l'appareil de chauffage 1 comme l'illustre la figure 2.

La grille d'homogénéisation 14 est ici réalisée sous la forme d'une plaque présentant une première zone Z1 d'ouverture pour le passage d'air pour refroidir les dissipateurs thermiques 27 associés à l'unité électronique de commande 25, et une deuxième zone Z2 formant un grillage ou maillage pour le passage d'air pour un échange thermique avec les éléments chauffants 15 avec un écoulement homogène du flux d'air. La première zone Z1 participe au refroidissement de l'unité électronique de commande 25 par le refroidissement des dissipateurs thermiques 27 tandis que la deuxième zone Z2 participe à l'homogénéisation de l'écoulement du flux d'air vers les éléments chauffants 15 du dispositif de chauffage électrique 13.

La forme des deuxièmes ouvertures 31 peut être choisie librement selon les besoins. Dans l'exemple illustré sur la figure 4, les deuxièmes ouvertures 31 sont de forme sensiblement rectangulaires. Bien entendu, toute autre forme peut être choisie en variante, par exemple une forme arrondie.

Les deuxièmes ouvertures 31 peuvent présenter des sections de passage d'air non homogènes, donc hétérogènes, pour être adaptées à l'application.

Notamment, les sections de passage d'air peuvent être réduites aux endroits où la vitesse du flux d'air traversant la grille d'homogénéisation 14 est plus rapide. Une réduction de la section de passage d'air peut se réaliser en épaississant la matière autour de la deuxième ouverture. Les sections de passage d'air peuvent être déduites par exemple en fonction de résultats de simulation(s) de l'écoulement aérodynamique.

La grille d'homogénéisation 14 est par exemple réalisée en matériau plastique. Il peut s'agir notamment du même matériau que le boîtier de l'appareil de chauffage 1.

Enfin, la grille d'homogénéisation comprend des moyens de fixation 35 sur le boîtier 3 de l'appareil de chauffage 1.

Ainsi, la présence de la première ouverture 29 en amont des dissipateurs thermiques 27 permet le passage d'une partie du flux d'air vers les dissipateurs thermiques 27 pour les refroidir. La première ouverture 29 est dimensionnée pour répartir un flux d'air minimum vers les dissipateurs thermiques 27.

Les deuxièmes ouvertures 31 permettent quant à elles de répartir un flux d'air homogène vers les éléments chauffants 15 du reste du dispositif de chauffage électrique 13. Les deuxièmes ouvertures 31 peuvent ne pas être homogènes et sont adaptées pour améliorer la répartition du flux d'air.

La partie pleine 33 adjacente à la première ouverture 29 permet d'éviter un écart de température trop important entre les sorties d'air du dispositif de chauffage électrique 13 du côté comprenant les dissipateurs thermiques 27 et de l'autre côté qui en est dépourvu.

La grille d'homogénéisation 14 permet ainsi de répartir un flux d'air sensiblement homogène vers le dispositif de chauffage électrique 13 en respectant les contraintes d'écart de température de +/-5°C imposées tout en assurant un refroidissement des dissipateurs thermiques 27 pour refroidir l'unité électronique de commande 25 spécifique au dispositif de chauffage électrique 13.

## Revendications

1. Appareil de chauffage pour véhicule automobile comprenant un dispositif de chauffage électrique d'un flux d'air à destination de l'habitacle dudit véhicule, le dispositif de chauffage électrique (13) étant destiné à être traversé par le flux d'air à réchauffer et comprenant :
- au moins un élément chauffant (15),
- une unité électronique de commande (25) configurée pour commander ledit au moins un élément chauffant (15), et
- au moins un dissipateur thermique (27) agencé sur un côté du dispositif de chauffage électrique (13) adjacent à l'unité électronique de commande (25) de façon à pouvoir dissiper la chaleur générée par l'unité électronique de commande (25), l'appareil de chauffage comporte en outre une grille d'homogénéisation, (14),
- agencée dans l'appareil de chauffage en amont du dispositif de chauffage électrique (13) selon le sens d'écoulement dudit flux d'air, et
- comprenant :
• une première zone (Z1) présentant au moins une première ouverture (29) agencée en amont dudit au moins un dissipateur thermique (27) et
• une deuxième zone (Z2) distincte de la première zone (Z1) et présentant une pluralité de deuxièmes ouvertures (31) agencées en amont dudit au moins un élément chauffant (15) selon le sens d'écoulement dudit flux d'air.

2. Appareil de chauffage selon la revendication 1, dans lequel lesdites deuxièmes ouvertures (31) présentent respectivement une section de passage d'air inférieure à la section de passage d'air de ladite au moins une première ouverture (29).

3. Appareil de chauffage selon l'une des revendication 1 ou 2, dans lequel la grille d'homogénéisation présente au moins une partie pleine (33) agencée entre ladite au moins une première ouverture (29) et la pluralité de deuxièmes ouvertures (31).

4. Appareil de chauffage selon l'une quelconque des revendications précédentes, dans lequel la grille d'homogénéisation présente une forme générale sensiblement parallélépipédique.

5. Appareil de chauffage selon les revendications 3 ou 4, dans lequel ladite au moins une partie pleine (33) s'étend sur toute la hauteur de la grille d'homogénéisation (14).

6. Appareil de chauffage selon la revendication 3 prise en combinaison avec l'une des revendications 4 ou 5, dans laquelle ladite au moins une partie pleine (33) s'étend sur une largeur présentant un rapport de l'ordre de un à trois avec la largeur de la première ouverture (29).

7. Appareil de chauffage selon l'une quelconque des revendications précédentes dans lequel les deuxièmes ouvertures (31) présentent des sections de passage d'air hétérogènes.

8. Appareil de chauffage selon l'une quelconque des revendications précédentes, **caractérisé en ce que** la grille d'homogénéisation est réalisée en matériau plastique.

9. Appareil de chauffage selon l'une quelconque des revendications précédentes, dans lequel ledit au moins un élément chauffant (15) est un élément résistif à coefficient de température positif,

10. Appareil de chauffage selon l'une quelconque des revendications précédentes, dans lequel la grille d'homogénéisation (14) est sensiblement parallélépipédique et ladite au moins une première ouverture (29) de la grille d'homogénéisation (14) s'étend sur une hauteur de l'ordre de 50 % à 120 % de la hauteur dudit au moins un dissipateur thermique (27) du dispositif de chauffage électrique (13).

11. Appareil de chauffage selon l'une quelconque des revendications précédentes, dans lequel la grille d'homogénéisation (14) est sensiblement parallélépipédique et ladite au moins une première ouverture (29) s'étend sur une largeur sensiblement égale à la largeur dudit au moins un dissipateur thermique (27) du dispositif de chauffage électrique (13).

12. Appareil de chauffage selon l'une quelconque des revendications précédentes, dans lequel le dispositif de chauffage électrique (13) comprend un connecteur (21) portant l'unité électronique de commande (25) réalisé en matériau métallique thermiquement conducteur et dans lequel ledit au moins un dissipateur thermique (27) est réalisé d'une seule pièce avec le connecteur (21).

13. Appareil de chauffage selon l'une quelconque des revendications précédentes, comprenant une pluralité de dissipateurs thermiques (27) définissant une forme générale sensiblement en peigne.

14. Appareil de chauffage selon l'une quelconque des revendications précédentes, dans lequel le dispositif de chauffage électrique (13) comprend au moins une ailette d'échange thermique (19) agencée en contact-thermique avec ledit au moins un élément chauffant (15) et configurée pour être traversée par le flux d'air traversant le dispositif de chauffage électrique (13) et pour transmettre la chaleur dudit au moins un élément chauffant (15) audit flux d'air.

## Patentansprüche

1. Heizgerät für ein Kraftfahrzeug, das eine elektrische Vorrichtung zum Erwärmen eines für den Innenraum des Fahrzeugs bestimmten Luftstroms enthält, wobei die elektrische Heizvorrichtung (13) dazu bestimmt ist, vom zu erwärmenden Luftstrom durchquert zu werden und enthält:
- mindestens ein Heizelement (15),
- eine elektronische Steuereinheit (25), die konfiguriert ist, das mindestens eine Heizelement (15) zu steuern, und
- mindestens einen Wärmeableiter (27), der an einer Seite der elektrischen Heizvorrichtung (13) an die elektronische Steuereinheit (25) angrenzend angeordnet ist, um die von der elektronischen Steuereinheit (25) erzeugte Wärme ableiten zu können,
wobei das Heizgerät außerdem ein Homogenisierungsgitter (14) enthält, das im Heizgerät stromaufwärts vor der elektrischen Heizvorrichtung (13) in Strömungsrichtung des Luftstroms angeordnet ist und enthält:
• eine erste Zone (Z1), die mindestens eine erste Öffnung (29) aufweist, die stromaufwärts vor dem mindestens einen Wärmeableiter (27) angeordnet ist, und
• eine sich von der ersten Zone (Z1) unterscheidende zweite Zone (Z2), die eine Vielzahl zweiter Öffnungen (31) aufweist, die stromaufwärts vor dem mindestens einen Heizelement (15) in Strömungsrichtung des Luftstroms angeordnet sind.

2. Heizgerät nach Anspruch 1, wobei die zweiten Öffnungen (31) je einen Luftdurchgangsquerschnitt kleiner als der Luftdurchgangsquerschnitt der mindestens einen ersten Öffnung (29) aufweisen.

3. Heizgerät nach einem der Ansprüche 1 oder 2, wobei das Homogenisierungsgitter mindestens einen massiven Teil (33) aufweist, der zwischen der mindestens einen ersten Öffnung (29) und der Vielzahl von zweiten Öffnungen (31) angeordnet ist.

4. Heizgerät nach einem der vorhergehenden Ansprüche, wobei das Homogenisierungsgitter eine im Wesentlichen parallelepipedische allgemeine Form aufweist.

5. Heizgerät nach den Ansprüchen 3 oder 4, wobei der mindestens eine massive Teil (33) sich über die ganze Höhe des Homogenisierungsgitters (14) erstreckt.

6. Heizgerät nach Anspruch 3 in Kombination mit einem der Ansprüche 4 oder 5, wobei der mindestens eine massive Bereich (33) sich über eine Breite erstreckt, die ein Verhältnis in der Größenordnung von eins bis drei zur Breite der ersten Öffnung (29) aufweist.

7. Heizgerät nach einem der vorhergehenden Ansprüche, wobei die zweiten Öffnungen (31) heterogene Luftdurchgangsquerschnitte aufweisen.

8. Heizgerät nach einem der vorhergehenden Ansprüche, **dadurch gekennzeichnet, dass** das Homogenisierungsgitter aus Kunststoff hergestellt ist.

9. Heizgerät nach einem der vorhergehenden Ansprüche, wobei das mindestens eine Heizelement (15) ein Widerstandselement mit positivem Temperaturkoeffizient ist.

10. Heizgerät nach einem der vorhergehenden Ansprüche, wobei das Homogenisierungsgitter (14) im Wesentlichen parallelepipedisch ist, und die mindestens eine erste Öffnung (29) des Homogenisierungsgitters (14) sich über eine Höhe in der Größenordnung von 50% bis 120% der Höhe des mindestens einen Wärmeableiters (27) der elektrischen Heizvorrichtung (13) erstreckt.

11. Heizgerät nach einem der vorhergehenden Ansprüche, wobei das Homogenisierungsgitter (14) im Wesentlichen parallelepipedisch ist, und die mindestens eine erste Öffnung (29) sich über eine Breite im Wesentlichen gleich der Breite des mindestens einen Wärmeableiters (27) der elektrischen Heizvorrichtung (13) erstreckt.

12. Heizgerät nach einem der vorhergehenden Ansprüche, wobei die elektrische Heizvorrichtung (13) einen die elektronische Steuereinheit (25) tragenden Verbinder (21) enthält, der aus wärmeleitendem metallischen Material hergestellt ist, und wobei der mindestens eine Wärmeableiter (27) aus einem Stück mit dem Verbinder (21) hergestellt ist.

13. Heizgerät nach einem der vorhergehenden Ansprüche, das eine Vielzahl von Wärmeableitern (27) enthält, die eine allgemeine Form im Wesentlichen gleich einem Kamm definieren.

14. Heizgerät nach einem der vorhergehenden Ansprüche, wobei die elektrische Heizvorrichtung (13) mindestens eine Wärmetauscherrippe (19) enthält, die in Wärmekontakt mit dem mindestens einen Heizelement (15) angeordnet und konfiguriert ist, vom die elektrische Heizvorrichtung (13) durchquerenden Luftstrom durchquert zu werden und die Wärme vom mindestens einen Heizelement (15) zum Luftstrom zu übertragen.

## Claims

1. Heater unit for a motor vehicle comprising an electric heating device for heating a flow of air bound for the interior of said vehicle, the electric heating device (13) being intended to have the flow of air that is to be heated up passing through it and comprising:
- at least one heating element (15),
- an electronic control unit (25) configured to control said at least one heating element (15), and
- at least one heat sink (27) arranged on one side of the electric heating device (13) adjacent to the electronic control unit (25) so as to be able to dissipate the heat generated by the electronic control unit (25),
the heater unit further comprises a homogenization grating (14),
- positioned in the heater unit upstream of the electric heating device (13) in the direction in which said flow of air flows, and
- comprising:
• a first zone (Z1) having at least one first opening (29) positioned upstream of said at least one heat sink (27), and
• a second zone (Z2) distinct from the first zone (Z1) and having a plurality of second openings (31) positioned upstream of said at least one heating element (15) in the direction in which said flow of air flows.

2. Heater unit according to Claim 1, in which said second openings (31) respectively have a cross section for the passage of air that is smaller than the cross section for the passage of air of said at least one first opening (29).

3. Heater unit according to either of Claims 1 and 2, in which the homogenization grating has at least one solid part (33) positioned between said at least one first opening (29) and the plurality of second openings (31).

4. Heater unit according to any one of the preceding claims, in which the homogenization grating has a substantially parallelepipedal overall shape.

5. Heater unit according to Claims 3 and 4, in which said at least one solid part (33) extends over the entire height of the homogenization grating (14).

6. Heater unit according to Claim 3 considered in combination with either of Claims 4 and 5, in which said at least one solid part (33) extends over a width that is in a ratio of the order of one to three with the width of the first opening (29).

7. Heater unit according to any one of the preceding claims, in which the second openings (31) have heterogeneous air-passage cross sections.

8. Heater unit according to any one of the preceding claims, **characterized in that** the homogenization grating is made of plastic.

9. Heater unit according to any one of the preceding claims, in which said at least one heating element (15) is a positive temperature coefficient resistive element.

10. Heater unit according to any one of the preceding claims, in which the homogenization grating (14) is substantially parallelepipedal and said at least one first opening (29) of the homogenization grating (14) extends over a height of the order of 50% to 120% of the height of said at least one heat sink (27) of the electric heating device (13).

11. Heater unit according to any one of the preceding claims, in which the homogenization grating (14) is substantially parallelepipedal and said at least one first opening (29) extends over a width substantially equal to the width of said at least one heat sink (27) of the electric heating device (13).

12. Heater unit according to any one of the preceding claims, in which the electric heating device (13) comprises a connector (21) bearing the electronic control unit (25) made of a thermally conducting metallic material and in which said at least one heat sink (27) is made as one with the connector (21).

13. Heater unit according to any one of the preceding claims, comprising a plurality of heat sinks (27) defining a substantially comb-like overall shape.

14. Heater unit according to any one of the preceding claims, in which the electric heating device (13) comprises at least one heat exchange fin (19) positioned in thermal contact with said at least one heating element (15) and configured to have passing through it the flow of air that passes through the electric heating device (13) and to transmit the heat of said at least one heating element (15) to said flow of air.
